(19) Europäisches Patentamt
European Patent Office
Office européen des brevets

(11) Publication number: **0 249 400 B1**

# EUROPEAN PATENT SPECIFICATION

(45) Date of publication of patent specification: **24.04.91**   (51) Int. Cl.⁵: **B01D 53/18**

(21) Application number: **87304958.9**

(22) Date of filing: **04.06.87**

(54) Gas-liquid contacting apparatus.

(30) Priority: **07.06.86 JP 131096/86**
**18.02.87 JP 21323/87 U**

(43) Date of publication of application:
**16.12.87 Bulletin 87/51**

(45) Publication of the grant of the patent:
**24.04.91 Bulletin 91/17**

(84) Designated Contracting States:
**AT BE CH DE FR GB IT LI NL SE**

(56) References cited:
**FR-A- 701 314**
**GB-A- 2 020 192**
**US-A- 3 266 224**
**US-A- 4 009 229**

(73) Proprietor: **SANKYO KOGYO CO., LTD.**
**20-11, 7-chome, Nishi Gotanda Shinagawa-ku**
**Tokyo(JP)**

(72) Inventor: **Hongo, Kenjiro**
**5-28, 2-chome Horinouchi**
**Suginami-ku Tokyo(JP)**
Inventor: **Saito, Shiro**
**202, 3-8, 3-chome, Kami Aoki Nishi**
**Kawaguchi-shi Saitama-ken(JP)**

(74) Representative: **Everitt, Christopher James**
**Wilders et al**
**F.J. CLEVELAND & COMPANY 40/43 Chancery Lane**
**London WC2A 1JQ(GB)**

## Description

BACKGROUND OF THE INVENTION

(1) Field of the invention

This invention relates to a gas-liquid contacting apparatus. Said apparatus is utilized for deodorizing gas.

(2) Description of the Prior Art

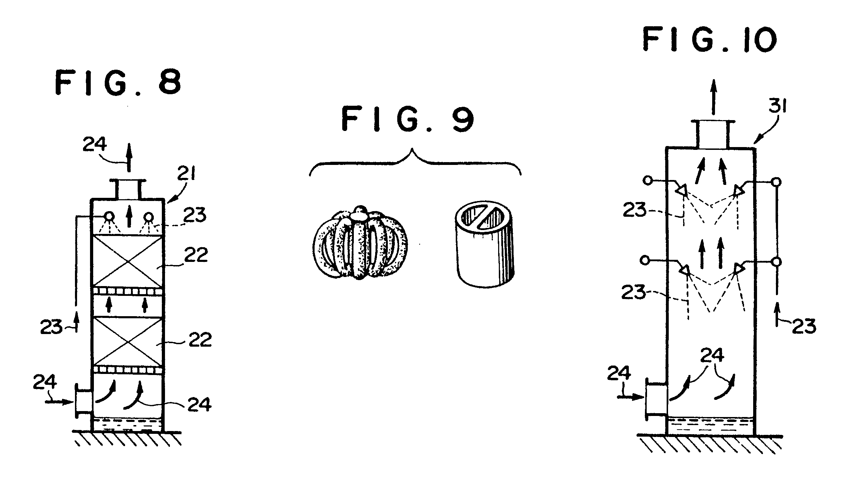

Conventionally, as system deodorizing offensive odor gas or harmful gas, the washing-absorbing system is most popularly employed. In order to increase the absorption efficiency for specific components in a gas, it is important to contact gas with liquid effectively as much as possible and to facilitate the chemical decomposition of these specific components and diffusion thereof into liquid. There are many types of equipment performing the washing-absorbing system, however, popular deodorizing equipment is classified into the packed tower system (Fig.8) and spray system (Fig.10). Referring to Fig.8 and Fig.10, same numerals in the drawings shall indicate identical or corresponding parts.

A washing-absorbing equipment of the packed tower system 21 is an equipment to contact gas with liquid by feeding a liquid 23 to the surface of a packing 22 having large surface area and feeding a gas 24 in the counter current (reversely directed to the dropping direction, in principle). Conditions of the packing are large specific surface area and high void ratio, low resistance to gas flow, and uneasy occurrence of overflow or drift. Further conditions are high acid resistance, low specific gravity and high mechanical strength. Packings popularly used are of two types as illustrated in Fig.9.

A spray tower 31 is used for humidifying, cooling and dust-collecting of gas while there can be used as a deodorizing equipment. The spray tower system easily causes drift, providing a bad influence to the deodorizing effect. In order to avoid such bad influence, the multi-stage spray system as illustrated in the drawing is used in many cases. A system illustrated in Fig.10 is of two-stage type while three-stage type or five-stage type is actually applied for.

Since such a vertical type equipment is unable to use various types of chemicals by itself, three equipments are required to use three types of chemicals, for instance.

On the packed tower system, operation becomes impossible owing to the splash phenomenon of liquid if the flow rate of gas is much too high while too small quantity of feeding liquid causes drift and too much quantity causes overflow. Chemicals contain- ing solids or sediments can cause clogging where is required much elaboration to remove clogging and replace packings.

SUMMARY OF THE INVENTION

A gas-liguid contacting apparatus according to the present invention comprises a gas-liquid contacting apparatus comprising a gas channel, a blowing device installed in relation to said gas channel, a screen comprising at least two parallel sheets one behind the other in the direction of gas flow, and inclined to the horizontal plane, each sheet being formed with triangular-sectional bars fixed in parallel, on the rods by their tips, with spaces between adjacent bars, to widely spaced rods, the sheets being positioned so that the bars on one sheet are on a different horizontal plane than the bars of the adjacent sheet, said screen being installed in said gas channel so as to intercept the flow of gas therein, a liquid dosing device positioned in said gas channel to pour liquid onto said screen to form a liquid film on the entire surface of the screen, said film being broken by the gas flowing through said spaces, and a pump installed in a pipe connecting the bottom of the gas channel and said liquid dosing device to re-circulate the liquid falling from said screen and the inclination of the screen being chosen in dependence upon the shape of the bars, the spacing of the bars and the flowing speed of the gas and the quantity of liquid, to allow a continuous liquid film to form over the entire screen when liquid is poured continuously on to the screen to provide an effective contact of the gas by the film.

The screen is mounted at an angle to allow a film to form over the entire screen when liquid is poured continuously onto the screen, the angle being selected according to the effects of the shape of the bars, the spacing of the bars, the flowing speed of the gas and the quantity of liquid.

By pouring liquid from the liquid dosing device onto the screen, a liquid film having a certain thickness is formed according to the molecular force. By feeding gas through the gas channel by the blowing device, the formed liquid film can contact the gas continuously and effectively. The film is broken by the passing of gas, however, the film is formed again immediately by the liquid, which is supplied continuously. On the screen, such breaking and forming of the film is repeated. The liquid falling from the screen is returned to the liquid dosing device by the pump and can be utilized to contact the gas again.

The flowing speed of the gas can be changed by varying the quantity of the pouring liquid. Also, by changing the angle of the screen, the relation between the flowing speed of the gas and the quantity of liquid can be adjusted.

Increased gas-liquid contacting area is provided by multiple screens. The area of each screen is increased by using two sheets of bars. The spaces between the bars of each sheet are not in the same plane. Several sections of screen with liquid dosing device are combined in each unit of the gas-liquid contacting apparatus.

To make use of more than one type of liquid, a sectional drive system comprising several units, with a demister installed at the output of each unit, is used, where the pumps may be driven or stopped individually to allow the use of the different liquids.

Consequently, an object of the present invention is to provide a continuous and effective gas-liquid contacting apparatus.

Another object of the present invention is to provide a superior gas-liquid contacting apparatus, achieved by varying the liquid dosing quantity and by pouring the liquid in the quantity corresponding to the increased passing speed of gas.

Another and further object of the present invention is that the sectional drive system allows more than one type of contacting liquid to be used when necessary.

Another and further object of the present invention is to avoid clogging of the screen by installing the screen across the gas channel, always maintaining a liquid film on the bars by means of liquid falling continuously and naturally onto the screen and by minimizing the pressure drop without decreasing the contacting effect according to the gas-liquid contact by repeated breaking and reforming of this liquid film by gas flow, without splashing or overflow and drift of liquid.

Another and further object of the present invention is to provide an effective gas-liquid contact by suitable selection of the spacing between the bars of the screen and the shapes of the bars and rods according to the quantity of liquid.

Another and further object of the present invention is to make a more effective gas-liquid contact by a construction comprising two sheets of bars within one screen where the spaces between the bars of each sheet are not in a same plane when the screen is mounted in the gas channel.

Another and further object of the present invention is to adjust optionally the relation of the flowing speed of gas and quantity of liquid by changing the angle of the screen.

Another and further object of the present invention is to provide a liquid dosing device to drop liquid evenly onto the screen.

Another and further object of the present invention is to provide a liquid dosing device enabling a more even flow of liquid by curving the end of the liquid feeding part by more than 90 degrees at the brim of the flowing outlet so that the liquid leaving the liquid feeding part is nearly in a vertical plane.

Other and further objects of the present invention will become apparent upon a reading of the following description of embodiments shown in the accompanying drawings.

## BRIEF DESCRIPTION OF THE DRAWINGS

Fig.1 is a schematic front view of a gas-liquid contacting apparatus of the present invention;

Fig.2 is a schematic front view of another embodiment of the present invention;

Fig.3 is a front view of a screen;

Fig.4 is a side view of the screen;

Fig.5 is a side view of another embodiment of the screen;

Fig. 6 is a partial cut-away perspective view of an example of a liquid vessel;

Fig.7 is an illustration showing a liquid film on the screen shown in Fig.5;

Fig.8 is a schematic front view of a device of the known packed tower system;

Fig.9 is a perspective view of two types of packing; and

Fig.10 is a schematic front view of a device of the known spray tower system.

## DETAILED DESCRIPTION OF THE INVENTION

Referring to the drawings, 1 is a gas-liquid contacting apparatus comprising a gas channel 2, a blowing device 3 mounted in line with the channel 2, a screen 4 arranged in the channel 2, a liquid dosing device 5 projecting into the channel for pouring liquid onto the screen 4 and a pump 6 for feeding liquid dropped from the screen 4 back to the liquid dosing device.

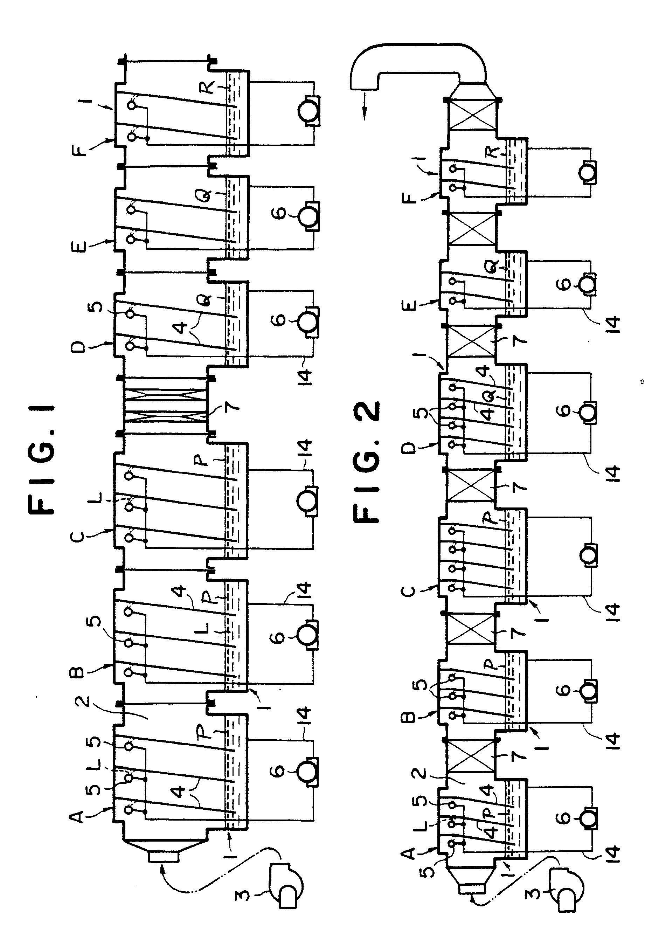

Fig.1 shows a combination of units A, B and C, and another combination of D, E and F, both of which are connected by means of a demister 7. Fig .2 is a case where each unit, A through F, is equipped with a demister 7.

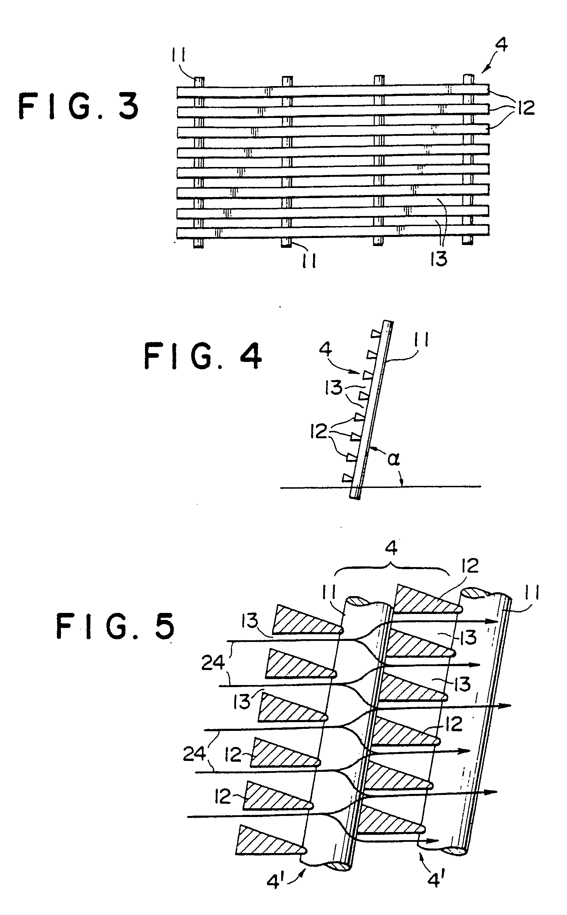

The screen 4 is a flat screen comprising rods 11 and bars 12 arranged in parallel thereon (Fig.3 and Fig.4). Fig.5 shows the screen 4 composed of a pair of sheets 4', in which both sheets 4' are arranged so that the spaces 13 between the bars 12 are not in the same plane. Gas 24 passes through the spaces 13 on the left side and flows around the bars on the right providing a more effective gas-liquid contact.

This screen 4 is installed across the gas channel 2 with the bars 12 horizontal. The angle of this screen is usually 70 - 85 degrees to the horizontal, the angle allowing a film to form over the entire screen when liquid is poured continuously onto the screen, this being affected by the shape of the bars the spacing 13 between the bars and the speed of the gas. The pump 6 is installed in a channel 14 which connects to the liquid dosing device 5, in the gas channel 2.

Liquid is poured onto an upper part of the screen 4 by the liquid dozing device 5 as shown in Fig.1 and Fig.2 and falls spreading over the entire screen.

As shown in Fig.1 and Fig.2, the apparatus comprises six units, providing an effective deodorizing action by pouring liquid "P" into units A, B and C, liquid "Q" into units D and E, and liquid "R" into unit F. By employing such a system, only those units which are necessary are operated depending on the concentration of the offensive odor, thereby contributing to power-saving.

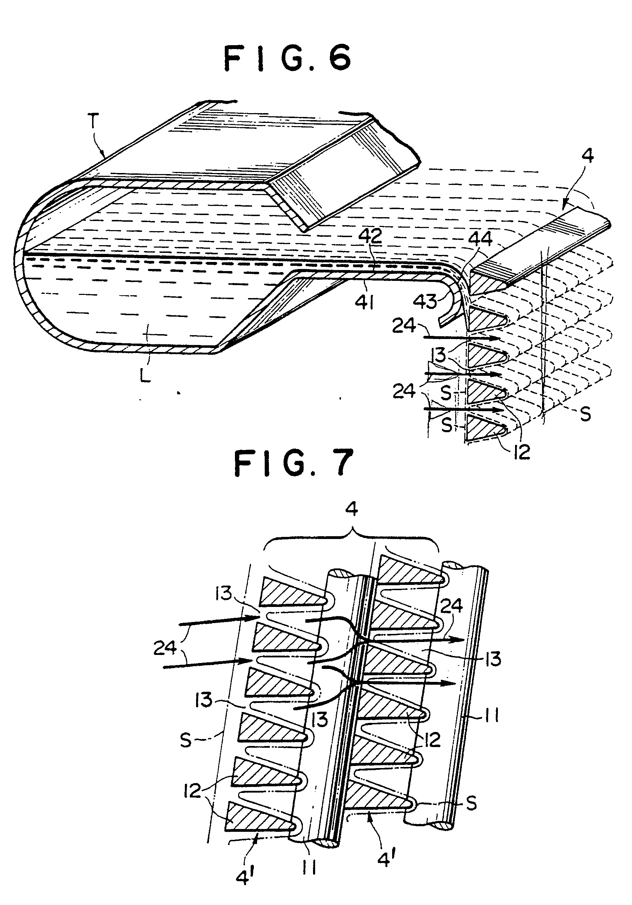

Further, a combination of the use of the liquid dozing device 5 and a liquid vessel T (see Figure 6) gives a more effective operation. 41 is the brim of an outlet for liquid L and a surface 42 is made flat for feeding out liquid in an even layer. 43 is a liquid feeding part, the surface 44 of which is curved underneath the brim 41, with a certain curvature. This radius of curvature is selected according to the viscosity and/or the flow rate of the liquid.

The liquid L flows out of the liquid vessel T in a thin, even layer on the surface 42, turns its direction along the curved surface 44 of the feeding part 43, and falls almost vertically in an even quantity.

The liquid falls onto the screen 4 and a liquid film S is formed over the entire surface of all the bars.

If the liquid feeding part 43 curves round for more than 90 degrees from the brim 41, the surfaces of the layer of liquid falling from the feeding surface 43 are nearly parallel whereby the flow rate can be kept more even on the entire section.

## Claims

1. A gas-liquid contacting apparatus comprising a gas channel (2), a blowing device (3) installed in line with said gas channel (2), a screen (4) comprising at least two parallel sheets (4') one behind the other in the direction of gas flow, and inclined to the horizontal plane, each sheet being formed with triangular-sectional bars (12), fixed in parallel, on the rods by their tips, with spaces (13) between adjacent bars (12), to widely spaced rods (11), the sheets (4') being positioned so that the bars (12) on one sheet (4') are on a different horizontal plane than the bars (12) of the adjacent sheet (4') said screen (4) being installed in said gas channel (2) so as to intercept the flow of gas therein, a liquid dosing device (5) positioned in said gas channel (2) to pour liquid onto said screen (4) to form a liquid film on the entire surface of the screen, said film being broken by the gas flowing through said spaces (13) and a pump (6) installed in a pipe (14) connecting the bottom of the gas channel (2) and said liquid dosing device (5) to re-circulate the liquid falling from said screen and the inclination of the screen (4) being chosen in dependence upon the shape of the bars (12), the spacing of the bars (12) and the flowing speed of the gas and the quantity of liquid, to allow a continuous liquid film to form over the entire screen (4) when liquid is poured continuously on to the screen (4) to provide an effective contact of the gas by the film.

2. A gas-liquid contacting apparatus as claimed in claim 1, wherein said liquid dosing device has a flat horizontal outlet brim extending over the whole horizontal length of the bars with a liquid feeding part which is curved underneath the outlet brim, with a certain radius of curvature.

3. A gas-liquid contacting apparatus as claimed in claim 2, wherein said liquid feeding part, is curved for more than 90 degrees from said outlet brim.

## Revendications

1. Appareil de mise en contact de gaz-liquide comprenant un canal de gaz (2), un dispositif de soufflage (3) agencé en ligne avec le canal de gaz (2), une grille (4) comprenant au moins deux panneaux parallèles (4') l'un derrière l'autre dans la direction d'écoulement du gaz, et inclinés par rapport au plan horizontal, chaque panneau comportant des barres de section triangulaire (12), fixées parallèlement, sur les tiges par leurs extrémités, avec des espaces (13) entre des barres (12) adjacentes, jusqu'à des tiges (11) largement espacées, les panneaux (4') étant positionnés de telle sorte que les barres (12) sur un panneau (4') soient sur un plan horizontal différent de celui des barres (12) du panneau (4') adjacent, cette grille (4) étant agencée dans le canal de gaz (2) de manière à y intercepter l'écoulement de gaz, un dispositif de dosage de liquide (5) positionné dans le canal de gaz (2) pour verser du liquide sur la grille (4) de manière à former une pellicule de liquide sur la surface entière de la grille, cette pellicule étant rompue par le gaz traversant les espaces (13) précités et une pompe (6) agencée dans un conduit (14) reliant le fond du canal de gaz (2) et le dispositif de dosage de liquide (5) pour remettre en circulation le liquide tombant de la grille et l'inclinaison de la grille (4) étant choisie en fonction de la forme des barres (12), de l'espacement des barres (12) et de la vitesse d'écoulement du gaz et de la quantité de liquide, pour permettre la formation d'une pellicule de liquide continue sur la grille entière (4) lorsque du liquide est versé de façon continue sur la grille (4) de manière à former un contact efficace du gaz par la pellicule.

2. Appareil de mise en contact de gaz-liquide suivant la revendication 1, caractérisé en ce que le dispositif de dosage de liquide comporte un bord de sortie horizontal plan s'étendant sur la longueur horizontale totale des barres avec une partie d'amenée de liquide qui est arrondie en dessous du bord de sortie, avec un certain rayon de courbure.

3. Appareil de mise en contact de gaz-liquide suivant la revendication 2, caractérisé en ce que la partie d'amenée de liquide est arrondie d'un angle de plus de 90 degrés par rapport au bord de sortie précité.

**Ansprüche**

1. Gas-Flüssigkeits-Kontaktapparat mit folgenden Merkmalen:
   ein Gaskanal (2),
   ein im Zuge des Gaskanals (2) angeordnetes Gebläse (3);
   eine Gitterwand (4) weist mindestens zwei parallele Scheiben (4') auf, die in Richtung des Gasstromes hintereinander und geneigt zu der horizontalen Ebene angeordnet sind:
   jede Scheibe ist aus Stangen (12) mit einem dreieckförmigen Querschnitt und aus Stäben (11) ausgebildet;
   die Stangen (12) sind parallel zueinander mit ihren Spitzen an den Stäben (11) befestigt, wobei Zwischenräume (13) zwischen benachbarten Stangen (12) freigelassen sind und die Stäbe (11) breite Zwischenräume freilassen;
   die Scheiben (4') sind so angeordnet, daß sich die Stangen (12) der einen Scheibe (4') in unterschiedlichen horizontalen Ebenen gegenüber den Stangen (12) der benachbarten Scheibe (4') befinden;
   die Gitterwand (4) ist so in den Gaskanal (2) eingebaut, daß sie den Gasstrom darin schneidet;
   eine Flüssigkeitsdosiereinrichtung (5) ist in dem Gaskanal (2) angeordnet, um Flüssigkeit so auf die Gitterwand (4) fließen zu lassen, daß ein Flüssigkeitsfilm auf der gesamten Oberfläche der Wand entsteht, wobei der Film von den durch die Zwischenräume (13) fließende Gas durchbrochen wird;
   eine Pumpe (6) ist in einem Rohr (14) eingebaut, das den Boden des Gaskanals (2) mit der Flüssigkeitsdosiereinrichtung (5) verbindet, um die von der Gitterwand herabfließende Flüssigkeit im Kreis zurückzufördern, und
   die Neigung der Gitterwand (4) wird in Abhängigkeit des Umrisses der Stangen (12) der Zwischenräume der Stangen (12) und der Strömungsgeschwindigkeit des Gases und der Flüssigkeitsmenge so gewählt, daß sich ein kontinuierlicher Flüssigkeitsfilm über die gesamte Gitterwand (4) bilden kann, wenn Flüssigkeit kontinuierlich auf die Gitterwand (4) fließt, um einen wirksamen Kontakt zwischen Gas und Films herzustellen.

2. Gas-Flüssigkeits-Kontaktapparat gemäß Anspruch 1, dadurch gekennzeichnet, daß die Flüssigkeitsdosiereinrichtung einen flachen horizontalen Auslaßrand, der sich über die ganze horizontale Länge der Stangen erstreckt, sowie einen Flüssigkeits-Zuführungsteil aufweist, das von dem Auslaßrand mit einem bestimmten Krümmungsradius nach unten ist.

3. Gas-Flüssigkeits-Kontaktapparat gemäß Anspruch 2, dadurch gekennzeichnet, daß das Flüssigkeits-Zuführungsteil von dem Auslaßrand um mehr als 90° umgebogen ist.

# FIG. I

# FIG. 2

EP 0 249 400 B1

FIG. 3

FIG. 4

FIG. 5

# F I G. 6

# F I G. 7

FIG. 8

FIG. 9

FIG. 10

EP 0 249 400 B1